# EUROPÄISCHE PATENTSCHRIFT

(11) **EP 1 620 758 B1**
(45) Veröffentlichungstag und Bekanntmachung des Hinweises auf die Patenterteilung: **10.12.2014**
(21) Anmeldenummer: 04728527.5
(22) Anmeldetag: 21.04.2004
(51) Int. Cl.: G02B 6/38, G02B 6/42

(54) **HYBRIDSTECKVERBINDER**
HYBRID PLUG-IN CONNECTOR
CONNECTEUR ENFICHABLE HYBRIDE

(30) Priorität: 29.04.2003 DE 10319418
(43) Veröffentlichungstag der Anmeldung: 01.02.2006
(73) Patentinhaber: Murrelektronik GmbH, 71570 Oppenweiler (DE)
(72) Erfinder: KAFNER, Franz, 71570 Oppenweiler (DE); GUTEKUNST, Jürgen, 72622 Nürtingen (DE); SCHUFFENHAUER, Andreas, 09113 Chemnitz (DE); JUNGHANNS, Friedemann, 09419 Thum / OT Jahnsbach (DE)
(74) Vertreter: Wasmuth, Rolf
(86) Internationale Anmeldenummer: PCT/EP2004/004186
(87) Internationale Veröffentlichungsnummer: WO 2004/097482

(56) Entgegenhaltungen:
- EP-A- 1 256 828
- EP-A2- 1 045 266
- US-A- 4 767 181
- US-A- 4 993 803
- US-A- 5 325 453
- US-A1- 2002 029 898

## Beschreibung

Die Erfindung betrifft einen Hybridsteckverbinder gemäß dem Oberbegriff des Anspruchs 1.

Ein derartiger Steckverbinder ist durch die US-A-4 178 068 bekannt. Der Lichtwellenleiter ist mit einem querschnittsverengten Mantelteil im Steckergehäuse, und zwar in einer Crimphülse aufgenommen, die auch die Ferrule umschließt. Die Ferrule stütz sich dabei über eine Schraubenfeder an der Crimphülse bzw. an einer die Crimphülse umgebenden Sperrhülse ab. Der Aufbau dieses bekannten Hybridsteckverbinders ist für die Montage durch einen Benutzer geeignet. Von Nachteil ist jedoch, dass viele Einzelteile nötig sind, die das Risiko der Störanfälligkeit des Hybridsteckverbinders mit sich bringen, dass durch Aufnahme des Schutzmantels in das Steckergehäuse dieses einen verhältnismäßig großen Querschnitt haben muss und dass die für einen IP-Schutzgrad erforderliche Dichtheit gegen Fremdkörper und Feuchtigkeit und Beständigkeit gegen Chemikalien, wie Kühl- und Schmiermittel, nicht erreicht wird.

Durch die DE-A1-19525210 ist eine Steckverbindung bekannt, die aus einem Stecker und einer Steckdose besteht, die mit einem Busankoppler eine Einheit bildet, und die zur optischen und elektrischen Verbindung dient. Der im Stecker mitgeführte Lichtleiter ist in diesem vergossen. Zur optischen Ankopplung dienen linsenartige Lichtleitererweiterungen, die über Fenster miteinander kommunizieren. Ferrule werden nicht verwendet.

Schließlich ist durch die DE-A1-101 48 780 ein Hybridstecker mit optischer und elektrischer Verbindung bekannt, der eine zentrale Bohrung für den Lichtleiter aufweist, die von einer koaxialen, elektrischen Kontaktfläche umhüllt ist. Der Lichtleiter, der Kontakt und das Kabel werden nach der Montage im Steckergehäuse mittels einer Vergussmasse festgelegt. Eine Ferrule wird nicht verwendet.

Die genannte US 4 178 068 und die genannte DE 101 48 780 gehen davon aus, dass die Lichtwellenleiter einzeln, ggf. noch zusammen mit einem einzelnen elektrischen Kontakt (DE 101 48 780), montiert und vergossen werden. Diese Einzelkontakte werden dann zu Steckverbindern zusammengestellt (US 4 178 068).

Die US 4,767,181 zeigt einen Hybridsteckverbinder, bei dem ein Lichtwellenleiter und zwei elektrische Kontakte vom Material des Steckergehäuses umspritzt und so im Steckergehäuse gehalten sind. Die Fixierung der den Lichtwellenleiter teilweise umgebenden Hülse sowie des elektrischen Kontakts erfolgt dabei formschlüssig im Material des Gehäuses.

Die EP 1 045 266 A2 zeigt einen Hybridsteckverbinder, bei dem der Lichtwellenleiter formschlüssig im Gehäuse gehalten ist. Auch hier ist der Lichtwellenleiter vom Material des Steckergehäuses umspritzt.

Die Aufgabe der Erfindung besteht darin, einen Hybridsteckverbinder der im Oberbegriff des Anspruchs 1 genannten Art zu schaffen, der einfach aufgebaut und damit weniger störanfällig ist und der im Durchmesser verhältnismäßig klein bleiben kann. Diese Aufgabe wird mit den Merkmalen des Anspruchs 1 gelöst.

Üblicherweise werden Steckverbinder nach der Kontaktierung mit Kunststoff umspritzt. Durch die dabei auftretenden sehr hohen Temperaturen werden jedoch die optischen Polymerfasern der Lichtwellenleiter zerstört. Verhindert wird dies durch die Anwendung der Vergusstechnologie. Damit wird ein schonendes Umhüllen des Anschlussbereiches ermöglicht und gleichzeitig die hohen Anforderungen bezüglich Dichtheit, elektrischer Kennwerte und chemischer Beständigkeit erfüllt. Darüber hinaus werden die Lichtwellenleiter und elektrischen Leitungen lagerichtig im Gehäuse gehalten, so dass keine Federelemente zum Führen der Ferrulen benötigt werden. Mit der Vergusstechnologie gemäß der Erfindung gelingt es, alle Elemente in einem Gehäuse anzuordnen und dann gemeinsam zu vergießen. Dadurch kann auch eine kleine Bauform realisiert werden.

Gemäß einer weiteren Ausbildung der Erfindung wird der Schutzmantel im Endbereich im Querschnitt verringert und dieser Endbereich in einer Ferrule aufgenommen. Damit kann eine verhältnismäßig dünne Ferrule verwendet werden. Beispielsweise kann nun für den Hybridsteckverbinder ein Gehäuse verwendet werden, das für die bekannten M12-Steckverbinder für die Verbindung von Kupferleitungen vorgesehen ist. Dabei ist der Lichtwellenleiter auch gegen das Eindringen von Fremdkörpern, Feuchtigkeit und Chemikalien geschützt.

Um den genannten Mantelendbereich einfacher herzustellen, ist gemäß einer weiteren Ausbildung der Erfindung der Schutzmantel ein Doppelmantel und der äußere Mantel im genannten Endbereich entfernt.

Gemäß einer weiteren Ausbildung der Erfindung sind die Lichtwellenleiter und die elektrischen Kontakte in einem definierten Raster um den zentrischen Mittelpunkt des Hybridsteckverbinders angeordnet. Dadurch kann auf das Absetzen des Schutzmantels im Endbereich gänzlich verzichtet werden; dafür ist das bekannte Steckbild des M12-Steckverbinders abzuändern, indem die Kontakte etwas nach außen gerückt werden. Die äußere Gestaltung des bekannten M12-Steckverbinders ändert sich hierdurch nicht. Daher ergibt sich gegenüber der genannten DE 101 48 780, bei der der einzige Lichtwellenleiter koaxial angeordnet ist, die Möglichkeit, unabhängig voneinander verschiedene Belegungen zu realisieren, beispielsweise zwei Lichtwellenleiter und zwei elektrische Leiter, aber auch jede andere Paarung.

Die Ferrulen sind derart gestaltet, dass sie einen Festsitz zum Einpressen in den Kontaktträger sowie einen geschlossenen Crimp zur Verbindung mit dem Kabelmantel besitzen.

Gemäß einer weiteren Ausbildung der Erfindung wird zur Reduzierung der Dämpfung bei der Übertragung der optischen Signale im Steckverbinder eine Optohülse vorzugsweise aus Messing eingesetzt.

Desweiteren können zur Ankopplung an die Sende- und Empfangselektronik in Fortführung der optischen Bauelemente optische Zwischenstücke erforderlich sein, die für eine verlustarme Übertragung der optischen Signale sorgen.

Die Erfindung wird nun anhand von Ausführungsbeispielen näher erläutert. Es zeigen:
- Fig. 1: einen Querschnitt durch einen Hybridsteckverbinder in Form einer Buchse gemäß der Erfindung,
- Fig. 2: einen Querschnitt durch einen Hybridsteckverbinder in Form eines Steckers gemäß der Erfindung,
- Fig. 3: einen Querschnitt durch die zusammengefügten Hybridsteckverbinder der Figuren 1 und 2,
- Fig. 4: einen Querschnitt durch eine beim Hybridsteckverbinder der Fig. 1 - 3 verwendete Ferrule,
- Fig. 5: eine Seitenansicht eines Endabschnitts einer Ader des Lichtwellenleiters gemäß der Erfindung,
- Fig. 6: einen Querschnitt durch eine zweite Ausführung einer Hybridsteckverbindung aus einer auf einem Verteiler anzuordnenden Buchse und einem in die Buchse gesteckten Stecker, wobei der Querschnitt die Kontaktierung der Lichtwellenleiter zeigt,
- Fig. 7: einen der Fig. 6 ähnlichen Querschnitt, der jedoch um 90° verdreht ist und die Kontaktierung der elektrischen Leiter zeigt,
- Fig. 8: einen Querschnitt durch eine dritte Ausführung einer Hybridsteckverbindung aus einer auf einem Verteiler anzuordnenden Stecker und einem auf den Stecker aufgesteckten Buchse, wobei der Querschnitt die Kontaktierung der Lichtwellenleiter zeigt, und
- Fig. 9: einen der Fig. 8 ähnlichen Querschnitt, der jedoch um 90° verdreht ist und die Kontaktierung der elektrischen Leiter zeigt.

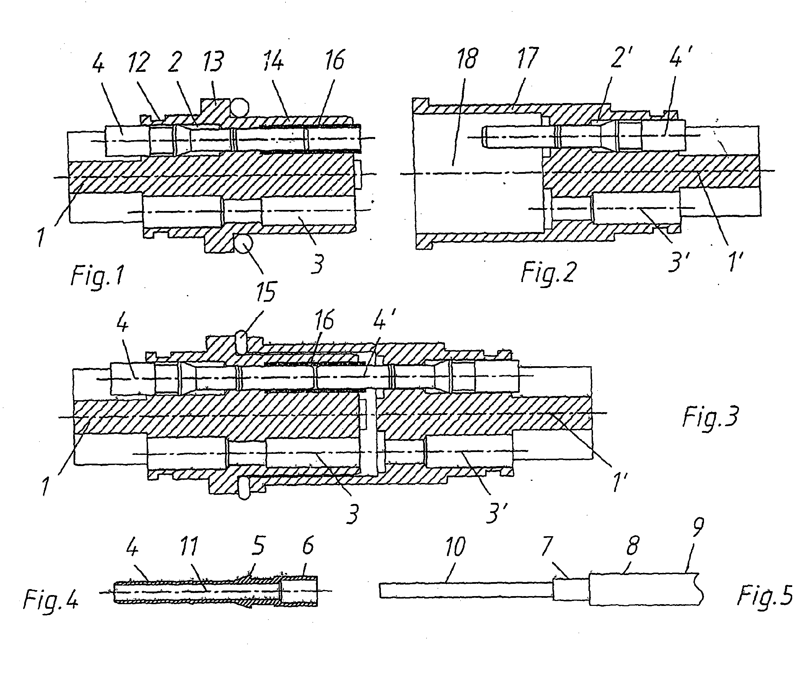

In Fig. 1 ist ein Hybridsteckverbinder in der allgemeinen Form einer Buchse dargestellt. Ein rundes Gehäuse 1, dass die Abmessungen des bekannten M12-Rundsteckverbinders aufweist, hat vier in seiner Längsrichtung verlaufende Öffnungen, von denen nur zwei, nämlich eine Öffnung 2 zur Aufnahme eines Lichtwellenleiters und eine Öffnung 3 zur Aufnahme einer Kupferleitung, gezeigt sind. Der Steckverbinder ist in nicht dargestellter Weise mit zwei Öffnungen 2 und zwei Öffnungen 3 versehen, so dass eine Vielzahl von Datenverbindungen zu Endgeräten (oder auch Sensoren) herstellbar ist, die über die beiden Kupferleitungen mit Strom versorgt werden können. In den Öffnungen 3 sind, wie nicht dargestellt ist, elektrische Kontaktelemente eingefügt. In den Öffnungen 2 sind so genannte Ferrulen, wie die Ferrule 4, eingelegt. Die Kontaktelemente und Ferrulen 4 werden in das Gehäuse 1 eingepresst, anschließend mit einer Hülse, die in die umlaufende Nut 12 eingreift, umschlossen und mit Vergussmasse vergossen, so dass sich die äußere Gestalt des bekannten M12-Rundsteckverbinders ergibt.

Eine Ferrule 4 ist einzeln in Fig. 4 gezeigt. Sie besteht aus einem Rohr, das in einem Endbereich mit einem Außenprofil 5 und einem aufgeweiteten Endabschnitt 6 versehen ist. Das Außenprofil dient zur Festlegung der Ferrule 4 im Gehäuse 1, und der Endabschnitt 6 dient zur Aufnahme eines Endbereichs 7 des Schutzmantels 8 einer Lichtwellenleiter-Ader 9, den die Fig. 5 zeigt. Dieser Endbereich 7 ist im Querschnitt gegenüber dem Mantel 8 verringert. Der Lichtwellenleiter 10 wird im nicht aufgeweiteten Teil 11 der Ferrule 4 aufgenommen. Der Mantel 8 liegt beim konfektionierten Hybridsteckverbinder außerhalb des Gehäuses 1, während der Endbereich 7 von dem Endabschnitt 6 umschlossen ist. Der Lichtwellenleiter 10 kann in der Ferrule 4 eingeklebt sein.

In Fig. 1 ist die Ferrule 4 (mit dem eingeführten Lichtwellenleiter) in das Gehäuse durch Festsitz eingedrückt. Das Gehäuse 1 ist etwa mittig mit einem Bund 13 versehen, an den sich nach rechts ein Gehäuseabschnitt 14 anschließt. Auf diesem Gehäuseabschnitt 14 ist ein flexibler Dichtungsring 15 eingelegt, der am Bund 13 anliegt. In die Öffnung 2 im Bereich des Gehäuseabschnitts 14 ist ferner eine Optohülse 16 eingelegt, die teils die Ferrule 4 umschließt und teils aus dem rechten Ende des Gehäuseabschnitts 14 hervorsteht. Diese Optohülse dient zur Verminderung der Dämpfung der Signale, die über die zu verbindenden Lichtwellenleiter übertragen werden.

In Fig. 2 ist ein Hybridsteckverbinder in der allgemeinen Form eines Steckers dargestellt, der mit dem Hybridsteckverbinder der Fig. 1 zusammenwirkt. In einer der Fig. 1 ähnlichen Weise sind zwei Öffnungen 3' für elektrische Kontaktelemente zur Verbindung von Kupferleitungen und zwei Öffnungen 2' für die Koppelung von Lichtwellenleitern in einem runden Gehäuse 1' vorgesehen, das wie bei dem der Fig. 1 hergestellt ist. In die Öffnungen 2' sind wieder Ferrulen 4' eingelegt, die wie die Ferrulen 4 ausgebildet und durch Festsitz im Gehäuse 1' gehalten werden. Das Gehäuse 1' hat einen hülsenförmigen, linken Endabschnitt 17, der einen Raum 18 umschließt. In diesen Raum 18 ragt die Ferrule 4' hinein und wird der Gehäuseabschnitt 14 beim Zusammenstecken der beiden Hybridsteckverbinder der Figuren 1, 2 aufgenommen, wie Fig. 3 zeigt.

In Fig. 3 ist die Ferrule 4' in die Optohülse 4' soweit eingeführt, dass sich die beiden Ferrulen 4, 4' (mit den eingelegten Lichtwellenleitern) berühren. Dabei wird der Dichtungsring 15 verformt. Durch den Dichtungsring 15 und die Vergusstechnik wird ein äußerst wirksamer Schutz gegen das Eindringen von Fremdkörpern, Feuchtigkeit und Chemikalien erreicht.

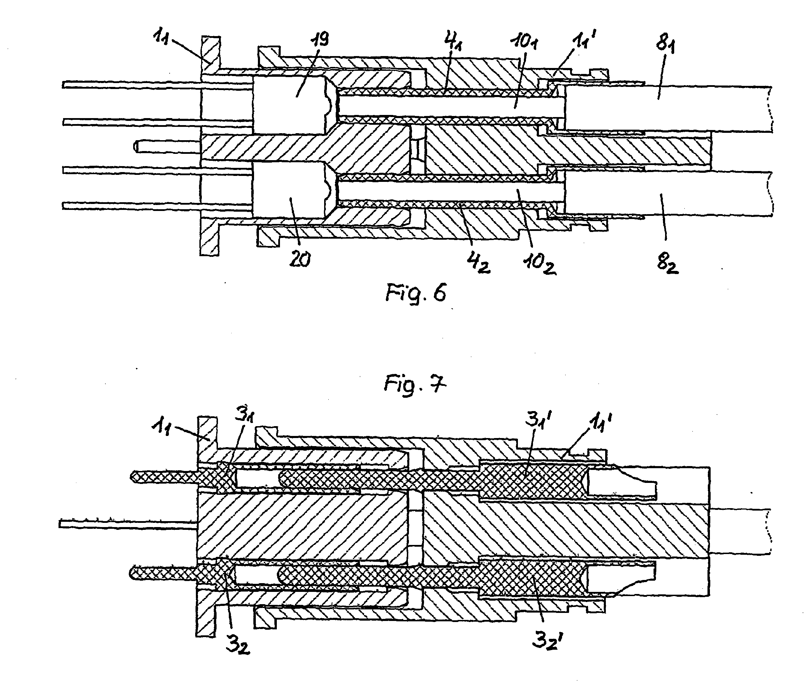

In den Figuren 6 - 9 sind zwei verschiedene Ausführungen für eine Hybridsteckverbindung gezeigt, bei denen im ersten Alternativfall die Buchse und im zweiten Alternativfall der Stecker auf einem nicht dargestellten Verteiler anzuordnen ist. Besonderer Wert ist dabei auf eine einfache Ankopplung der Lichtwellenleiter an die optischen Bauelemente (Sender und Empfänger) gelegt. Diese Ankopplung ist sehr einfach gestaltet, indem die optischen Bauelemente mit in der genannten Buchse bzw. im genannten Stecker integriert sind; damit können beide Lichtwellenleiter jeweils ohne Zwischenstücke gleichzeitig kontaktiert werden. Die Kontaktierung erfolgt dabei gleichzeitig mit den elektrischen Kontakten, die jweils berührungssicher gestaltet sind.

Im Einzelnen ist der Aufbau der Hybridsteckverbindung im Prinzip wie in Fig. 3 durchgeführt, mit dem Unterschied, dass Ferrulen nur im rechten Teil der Hybridsteckverbindung vorgesehen sind.

In Fig. 6 ist eine Buchse 1₁ mit zwei eingegossenen, optischen Bauelementen (Sender bzw. Empfänger) 19, 20 versehen, und in Fig. 7 ist diese Buchse 1₁ mit zwei eingegossenen Buchsenkontakten 3₁, 3₂ für elektrische Leiter versehen. Beide Bauelemente 19, 20 und beide Buchsenkontakte 3₁, 3₂ liegen in einem Abstand von der Mittelachse der Hybridsteckverbindung, und an sie schließen sich Öffnungen an, die auf der rechten Seite der Buchse 1₁ münden.

In Fig. 6 ist auch ein Stecker 1₁' mit vier um die Mittelachse der Hybridsteckverbindung verteilten Längsöffnungen versehen. In zwei dieser Öffnungen sind zwei Ferrulen 4₁, 4₂ vergossen, in die Lichtleiter 10₁, 10₂ eingeführt sind. Die Ferrrulen 4₁, 4₂ weisen an ihren rechten Enden Erweiterungen auf, die die Mäntel 8₁, 8₂ dieser Lichtleiter aufnehmen. Die Ferrulen 4₁, 4₂ sind mit den Lichtleitern 10₁, 10₂ bis zu den Bauelementen 19, 20 eingesteckt. Im Stecker 1₁' sind auch nach Fig. 7 in den anderen beiden Längsöffnungen zwei Steckerkontakten 3₁', 3₂' eingegossen, die mit den Buchsenkontakten 3₁, 3₂ in Kontakt stehen.

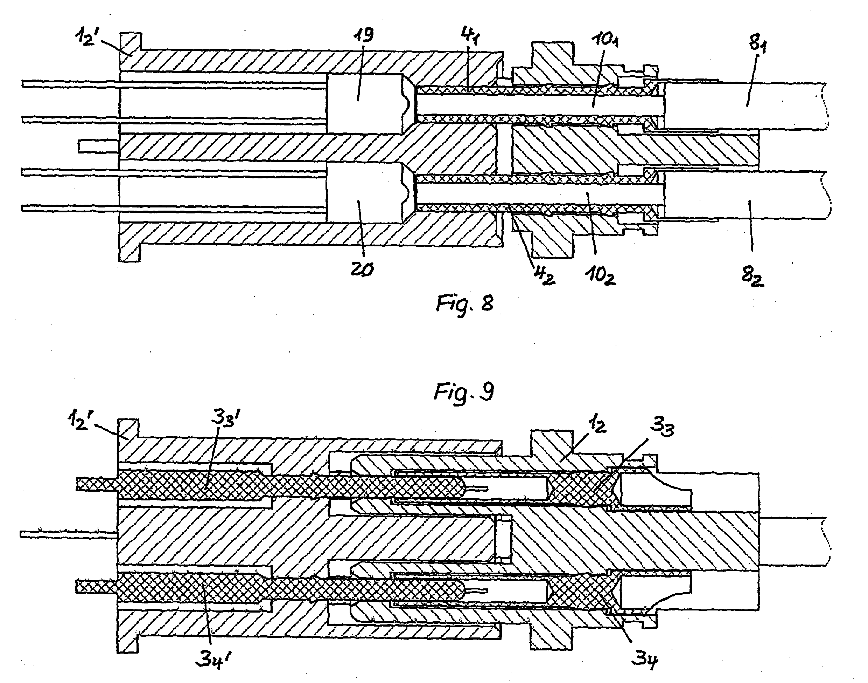

In den Figuren 8 und 9 sind Buchse und Stecker vertauscht. In Fig. 8 ist ein Stecker 1₂' mit zwei eingegossenen, optischen Bauelementen (Sender bzw. Empfänger) 19, 20 versehen, und in Fig. 9 ist dieser Stecker 1₂' mit zwei eingegossenen Steckerkontakten 3₃', 3₄' für elektrische Leiter versehen. Beide Bauelemente 19, 20 und beide Steckerkontakte 3₃', 3₄' liegen in einem Abstand von der Mittelachse der Hybridsteckverbindung, und an sie schließen sich Öffnungen an, die auf der rechten Seite des Stecker 1₂' münden.

In Fig. 8 ist auch eine Buchse 1₂ mit vier um die Mittelachse der Hybridsteckverbindung verteilten Längsöffnungen versehen. In zwei dieser Öffnungen sind zwei Ferrulen 4₁, 4₂ vergossen, in die wieder Lichtleiter 10₁ 10₂ eingeführt sind. Die Ferrulen 4₁, 4₂ weisen an ihren rechten Enden Erweiterungen auf, die wieder die Mäntel 8₁, 8₂ dieser Lichtleiter aufnehmen. Die Ferrulen 4₁, 4₂ sind mit den Lichtleitern 10₁, 10₂ bis zu den Bauelementen 19, 20 eingesteckt. Im Stecker 1₁' sind auch nach Fig. 9 in die anderen beiden Längsöffnungen zwei Buchsenkontakte 3₃, 3₄ eingegossen, die mit den Steckerkontakten 3₃', 3₄' in Kontakt stehen.

## Patentansprüche

1. Hybridsteckverbinder mit einem für elektrische Steckverbinder vorgesehenen Gehäuse, in dem Kontaktelemente zum Anschluss von Kupferleitungen und Halteelemente zum Anschluss von Lichtwellenleitern befestigt sind, die jeweils mit einem Schutzmantel versehen sind, wobei die Halteelemente jeweils durch eine Ferrule gebildet sind, in der ein vom Schutzmantel befreiter Endabschnitt des Lichtwellenleiters festgelegt ist,
**dadurch gekennzeichnet, dass** die Ferrulen (4, 4') im Gehäuse (1,1') eingepresst sind und dass die Ferrulen (4, 4', 4₁ - 4₄), mehrere Lichtwellenleiter (2, 2') und mehrere elektrische Kontakte (3, 3', 3₁ - 3₄, 3₁' - 3₄') in einem gemeinsamen Gehäuse (1, 1', 1₁, 1₁', 1₂, 1₂') vergossen sind.

2. Hybridsteckverbinder nach Anspruch 1,
**dadurch gekennzeichnet, dass** die Ferrulen (4, 4') ohne zusätzliche Federelemente im Gehäuse (1, 1') eingesetzt werden.

3. Hybridsteckverbinder nach Anspruch 1 und 2,
**dadurch gekennzeichnet, dass** der Hybridsteckverbinder die äußere Gestalt des bekannten M12-Rundsteckverbinders aufweist.

4. Hybridsteckverbinder nach einem der Ansprüche 1 bis 3,
**dadurch gekennzeichnet, dass** der Schutzmantel (8) in einem Endbereich (7) im Querschnitt verringert und dieser Endbereich (7) in der Ferrule (4, 4') aufgenommen ist.

5. Hybridsteckverbinder nach einem der Ansprüche 1 bis 4,
**dadurch gekennzeichnet, dass** der Schutzmantel ein Doppelmantel und der äußere Mantel im genannten Endbereich entfernt ist.

6. Hybridsteckverbinder nach Anspruch 3,
**dadurch gekennzeichnet, dass** die Lichtwellenleiter (2, 2') und elektrischen Kontakte (3, 3') in einem definierten Raster um den zentrischen Mittelpunkt des Hybridsteckverbinders angeordnet sind.

7. Hybridsteckverbinder nach einem der Ansprüche 1 bis 6,
**dadurch gekennzeichnet, dass** die Ferrulen (4, 4') im hinteren Teil einen geschlossenen Crimp zur Verbindung mit dem Schutzmantel (7, 8) der Lichtwellenader (9) aufweisen.

8. Hybridsteckverbinder nach einem der Ansprüche 1 bis 7,
**dadurch gekennzeichnet, dass** im Gehäuse (1) eine Optohülse vorzugsweise aus Messing zur Reduzierung der Dämpfung angeordnet ist.

9. Hybridsteckverbinder nach einem der Ansprüche 1 bis 8,
**dadurch gekennzeichnet, dass** zur verbesserten Ankopplung an die Sende- und Empfangselektronik in Fortführung der optischen Bauelemente optische Zwischenstücke angeordnet sind.

## Claims

1. Hybrid plug-in connector, comprising a housing provided for plug-in connectors, in which housing are located contact elements for connecting copper lines and retaining elements for connecting optical waveguides, each provided with a shield, wherein each of the retaining elements is represented by a ferrule in which an end section of the optical waveguide which is freed of the shield is located,
**characterised in that** the ferrules (4, 4') are pressed into the housing (1, 1'), and **in that** the ferrules (4, 4', 4₁ - 4₄), a plurality of optical wave guides (2, 2') and a plurality of electric contacts (3, 3', 3₁ - 3₄, 3₁' - 3₄') are encapsulated in a common housing (1, 1', 1₁, 1₁', 1₂, 1₂') -

2. Hybrid plug-in connector according to claim 1,
**characterised in that** the ferrules (4, 4') are installed into the housing (1, 1') without any additional spring elements.

3. Hybrid plug-in connector according to claims 1 and 2,
**characterised in that** the hybrid plug-in connector has the external shape of the known M12 circular connector.

4. Hybrid plug-in connector according to any of claims 1 to 3,
**characterised in that** the shield (8) has a reduced cross-section in an end region (7), and **in that** this end region (7) is accommodated in the ferrule (4, 4').

5. Hybrid plug-in connector according to any of claims 1 to 4,
**characterised in that** the shield is a double shield, and **in that** the outer shield is removed in said end region.

6. Hybrid plug-in connector according to claim 3,
**characterised in that** the optical wave guides (2, 2') and the electric contacts (3, 3') are arranged in a defined grid around the centre point of the hybrid plug-in connector.

7. Hybrid plug-in connector according to any of claims 1 to 6,
**characterised in that** the ferrules (4, 4') have a closed crimp for connection to the shield (7, 8) of the optical waveguide core (9) in their rear part.

8. Hybrid plug-in connector according to any of claims 1 to 7,
**characterised in that** an optical sleeve, preferably made of brass, is located in the housing (1) for reducing damping.

9. Hybrid plug-in connector according to any of claims 1 to 8,
**characterised in that** optical intermediate pieces are provided in extension of the optical components for improved coupling to the transmission and reception electronics.

## Revendications

1. Connecteur enfichable hybride avec une enveloppe, prévue pour des connecteurs enfichables électriques, dans laquelle sont fixés des éléments de contact destinés au raccordement de conducteurs en cuivre, et des éléments de retenue destinés au raccordement de fibres optiques qui sont pourvus chacun d'une gaine de protection, étant précisé que les éléments de retenue sont formés chacun par un manchon dans lequel est fixée une section d'extrémité, débarrassée de la gaine de protection, de la fibre optique,
**caractérisé en ce que** les manchons (4, 4') sont enfoncés dans l'enveloppe (1, 1') et **en ce que** les manchons (4, 4', 4₁-4₄), plusieurs fibres optiques (2, 2') et plusieurs contacts électriques (3, 3', 3₁-3₄, 3₁'-3_{4'}) sont coulés dans une enveloppe commune (1, 1', 1₁, 1₁', 1₂, 1₂').

2. Connecteur enfichable hybride selon la revendication 1,
**caractérisé en ce que** les manchons (4, 4') sont introduits dans l'enveloppe (1, 1') sans éléments à ressort supplémentaires.

3. Connecteur enfichable hybride selon les revendications 1 et 2,
**caractérisé en ce que** le connecteur enfichable hybride présente la forme extérieure du connecteur enfichable rond M12 connu.

4. Connecteur enfichable hybride selon l'une des revendications 1 à 3,
**caractérisé en ce que** la gaine de protection (8) a une section transversale réduite dans une zone d'extrémité (7), et cette zone d'extrémité (7) est logée dans le manchon (4, 4').

5. Connecteur enfichable hybride selon l'une des revendications 1 à 4,
**caractérisé en ce que** la gaine de protection est une gaine double, et la gaine extérieure est enlevée dans ladite zone d'extrémité.

6. Connecteur enfichable hybride selon la revendication 3,
**caractérisé en ce que** les fibres optiques (2, 2') et les contacts électriques (3, 3') sont disposés en une trame définie, autour du point de symétrie central du connecteur enfichable hybride.

7. Connecteur enfichable hybride selon l'une des revendications 1 à 6,
**caractérisé en ce que** les manchons (4, 4') comportent, dans leur partie arrière, un élément de sertissage fermé à relier à la gaine de protection (7, 8) des âmes de fibres optiques (9).

8. Connecteur enfichable hybride selon l'une des revendications 1 à 7,
**caractérisé en ce qu'**il est prévu dans l'enveloppe (1) une douille optique, de préférence en laiton, pour réduire l'affaiblissement.

9. Connecteur enfichable hybride selon l'une des revendications 1 à 8,
**caractérisé en ce que** pour un meilleur accouplement au système électronique d'émission et de réception, des éléments optiques intermédiaires sont disposés dans le prolongement des composants optiques.
